# EUROPEAN PATENT APPLICATION

(11) **EP 3 214 882 A1**
(43) Date of publication of application: **06.09.2017**
(21) Application number: 14907556.6
(22) Date of filing: 05.12.2014
(51) Int. Cl.: H04W 72/04

(54) **RESOURCE SCHEDULING METHOD, BASE STATION AND USER EQUIPMENT**

(71) Applicant: Huawei Technologies Co., Ltd., Longgang District Shenzhen, Guangdong 518129 (CN)
(72) Inventor: CHENG, Jingjing, Shenzhen Guangdong 518129 (CN); HE, Jia, Shenzhen Guangdong 518129 (CN); JIANG, Guangjian, Shenzhen Guangdong 518129 (CN)
(74) Representative: Goddar, Heinz J.
(86) International application number: PCT/CN2014/093178
(87) International publication number: WO 2016/086423

(57) **Abstract**

Embodiments of the present invention provide a resource scheduling method, user equipment, and a base station. The method includes: determining a resource scheduling priority of UE according to location assistance information of the UE, where the location assistance information of the UE is used to indicate a location relationship between the UE and an edge area of a high-frequency coverage area; and allocating a time-frequency resource to the UE according to the resource scheduling priority of the UE. In the embodiments of the present invention, a resource scheduling priority of UE is determined according to location assistance information that is determined according to a location relationship between the UE and an edge area of a high-frequency coverage area, and a time-frequency resource is allocated to the UE according to the resource scheduling priority of the UE, so as to ensure proper resource scheduling for an edge user of a high-frequency communication blind area, so that the edge user of the high-frequency communication blind area has relatively desirable user experience.

## Description

### TECHNICAL FIELD

The present invention relates to the communications field, and more specifically, to a resource scheduling method, a base station, and user equipment.

### BACKGROUND

As mobile terminals increase, users have more requirements for data volumes. At present, a bandwidth of a frequency band below 6 G cannot meet an increasing communication performance requirement. Therefore, using high frequencies (30 G to 300 G or higher) with abundant bandwidth resources as a backhaul and access frequency becomes a trend.

However, compared with the frequency band below 6 G, a high frequency has a narrow beam whose radiation area is greatly concentrated, whereas a degree of freedom (a quantity of beams) of a base station is limited, and because of reasons such as site deployment density and a site deployment location of the base station, a high frequency beam cannot radiate some areas; therefore, a high-frequency communication blind area is formed. Alternatively, because of a poor penetration capability of a high frequency, a scenario "dark under light" may occur when a shielding object such as a building is encountered; therefore, a high frequency channel may change suddenly, and another type of high-frequency communication blind area is formed. The high-frequency communication blind area causes sharp deterioration in performance for edge users of the high-frequency communication blind area. A resource scheduling priority is extremely low, and few resources or even no resources are obtained during resource allocation. As a result, such users have relatively poor user experience. An edge user of the high-frequency communication blind area refers to a user of an edge area adjacent to the high-frequency communication blind area among users of a high-frequency coverage area.

### SUMMARY

Embodiments of the present invention provide a resource scheduling method, a base station, and user equipment, so as to ensure proper resource scheduling for an edge user of a high-frequency communication blind area, so that the edge user of the high-frequency communication blind area has relatively desirable user experience.

According to a first aspect, a resource scheduling method is provided, where the method includes: determining a resource scheduling priority of user equipment UE according to location assistance information of the UE, where the location assistance information of the UE includes information about a location relationship between the UE and an edge area of a high-frequency coverage area; and allocating a time-frequency resource to the UE according to the resource scheduling priority of the UE.

With reference to the first aspect, in a first possible implementation, before the determining a resource scheduling priority of UE according to location assistance information of the UE, the method further includes: receiving the location assistance information sent by the UE, where the location assistance information is determined by the UE according to location detection information of the UE and the high-frequency coverage area.

With reference to the first aspect, in a second possible implementation, before the determining a resource scheduling priority of UE according to location assistance information of the UE, the method further includes: determining the location assistance information according to location information of the UE and the high-frequency coverage area.

With reference to the first aspect, or the first possible implementation of the first aspect, or the second possible implementation of the first aspect, in a third possible implementation, specifically, the location assistance information includes location indication information of the UE, where the location indication information is used to indicate whether the UE is located in the edge area of the high-frequency coverage area.

With reference to the first aspect, or the first possible implementation of the first aspect, or the second possible implementation of the first aspect, in a fourth possible implementation, specifically, the location assistance information includes edge location information of the UE, where the edge location information is used to indicate a distance between the UE and an edge of the high-frequency coverage area.

According to a second aspect, a resource scheduling method is provided, where the method includes: determining location assistance information of user equipment UE according to location detection information of the UE and a high-frequency coverage area; and sending the location assistance information to a base station that serves the UE, so that the base station determines a resource scheduling priority of the UE according to the location assistance information, and allocates a time-frequency resource to the UE according to the resource scheduling priority of the UE.

With reference to the second aspect, in a first possible implementation, the determining location assistance information of UE according to location detection information of the UE and a high-frequency coverage area is specifically: determining location indication information of the UE according to the location detection information of the UE and the high-frequency coverage area, where the location indication information is used to indicate whether the UE is located in an edge area of the high-frequency coverage area.

With reference to the second aspect, in a second possible implementation, the determining location assistance information of UE according to location detection information of the UE and a high-frequency coverage area is specifically: determining edge location information of the UE according to the location detection information of the UE and the high-frequency coverage area, where the edge location information is used to indicate a distance between the UE and an edge of the high-frequency coverage area.

According to a third aspect, a base station for resource scheduling is provided, where the base station includes: a first determining unit, configured to determine a resource scheduling priority of user equipment UE according to location assistance information of the UE, where the location assistance information of the UE is used to indicate a location relationship between the UE and an edge area of a high-frequency coverage area; and a resource scheduling unit, configured to allocate a time-frequency resource to the UE according to the resource scheduling priority of the UE.

With reference to the third aspect, in a first possible implementation, the base station further includes: a receiving unit, configured to receive the location assistance information sent by the UE, where the location assistance information is determined by the UE according to location detection information of the UE and the high-frequency coverage area.

With reference to the third aspect, in a second possible implementation, the base station further includes: a second determining unit, configured to determine the location assistance information according to location information of the UE and the high-frequency coverage area.

With reference to the third aspect, or the first possible implementation of the third aspect, or the second possible implementation of the third aspect, in a third possible implementation, specifically, the location assistance information includes location indication information of the UE, where the location indication information is used to indicate whether the UE is located in the edge area of the high-frequency coverage area.

With reference to the third aspect, or the first possible implementation of the third aspect, or the second possible implementation of the third aspect, in a fourth possible implementation, specifically, the location assistance information includes edge location information of the UE, where the edge location information is used to indicate a distance between the UE and an edge of the high-frequency coverage area.

According to a fourth aspect, user equipment is provided, where the user equipment includes: a determining unit, configured to determine location assistance information of the user equipment according to location detection information of the user equipment and a high-frequency coverage area; and a sending unit, configured to send the location assistance information to a base station that serves the user equipment, so that the base station determines a resource scheduling priority of the user equipment according to the location assistance information, and allocates a time-frequency resource to the user equipment according to the resource scheduling priority of the user equipment.

With reference to the fourth aspect, in a first possible implementation, the determining unit is specifically configured to determine location indication information of the user equipment according to the location detection information of the user equipment and the high-frequency coverage area, where the location indication information is used to indicate whether the user equipment is located in an edge area of the high-frequency coverage area.

With reference to the fourth aspect, in a second possible implementation, the determining unit is specifically configured to determine edge location information of the user equipment according to the location detection information of the user equipment and the high-frequency coverage area, where the edge location information is used to indicate a distance between the user equipment and an edge of the high-frequency coverage area.

Based on the resource scheduling method, the base station, and the user equipment in the embodiments of the present invention, a resource scheduling priority of the UE is determined according to location assistance information that is determined according to a location relationship between the UE and an edge area of a high-frequency coverage area, and a time-frequency resource is allocated to the UE according to the resource scheduling priority of the UE, so as to ensure proper resource scheduling for an edge user of a high-frequency communication blind area, so that the edge user of the high-frequency communication blind area has relatively desirable user experience.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a resource scheduling method according to an embodiment of the present invention;
FIG. 2 is an interaction flowchart of an uplink resource scheduling method according to an embodiment of the present invention;
FIG. 3 is an interaction flowchart of a downlink resource scheduling method according to an embodiment of the present invention;
FIG. 4 is an interaction flowchart of another uplink resource scheduling method according to an embodiment of the present invention;
FIG. 5 is an interaction flowchart of another downlink resource scheduling method according to an embodiment of the present invention;
FIG. 6 is a schematic flowchart of another resource scheduling method according to an embodiment of the present invention;
FIG. 7 is a schematic block diagram of a base station according to an embodiment of the present invention;
FIG. 8 is another schematic block diagram of a base station according to an embodiment of the present invention;
FIG. 9 is still another schematic block diagram of a base station according to an embodiment of the present invention;
FIG. 10 is a schematic block diagram of user equipment according to an embodiment of the present invention;
FIG. 11 is a schematic structural diagram of a base station according to an embodiment of the present invention; and
FIG. 12 is a schematic structural diagram of user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as: a Global System for Mobile Communications (GSM, Global System for Mobile Communications), a Code Division Multiple Access (CDMA, Code Division Multiple Access) system, Wideband Code Division Multiple Access (WCDMA, Wideband Code Division Multiple Access Wireless), General Packet Radio Service (GPRS, General Packet Radio Service), and Long Term Evolution (LTE, Long Term Evolution).

User equipment (UE, User Equipment), also referred to as a mobile terminal (Mobile Terminal), mobile user equipment, and the like, may communicate with one or more core networks by using a radio access network (for example, RAN, Radio Access Network). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus, which exchanges a voice and/or data with the radio access network.

A base station may be a base station (BTS, Base Transceiver Station) in GSM or CDMA, may be a base station (NodeB) in WCDMA, or may be an evolved NodeB (eNB or e-NodeB, evolutional Node B) in LTE, which is not limited in the present invention. However, for ease of description, the following embodiments are described by using an eNB as an example.

In an existing scheduling scheme, generally, a cell edge is demarcated based on only reference signal received power, or resource scheduling priorities of all users within a cell are sorted according to a signal to noise ratio (Signal to Noise Ratio, SNR), a traffic volume request, and the like of a user. However, situations such as channel mutation, out-of-service that are caused by a communication blind area in high frequency communication are not considered.

A high-frequency communication blind area causes sharp deterioration in performance for edge users of the blind area. A resource scheduling priority is extremely low, and few resources or even no resources are obtained during resource allocation. As a result, such users have relatively poor user experience. How to ensure proper resource scheduling for such users is a problem to be resolved in the present invention.

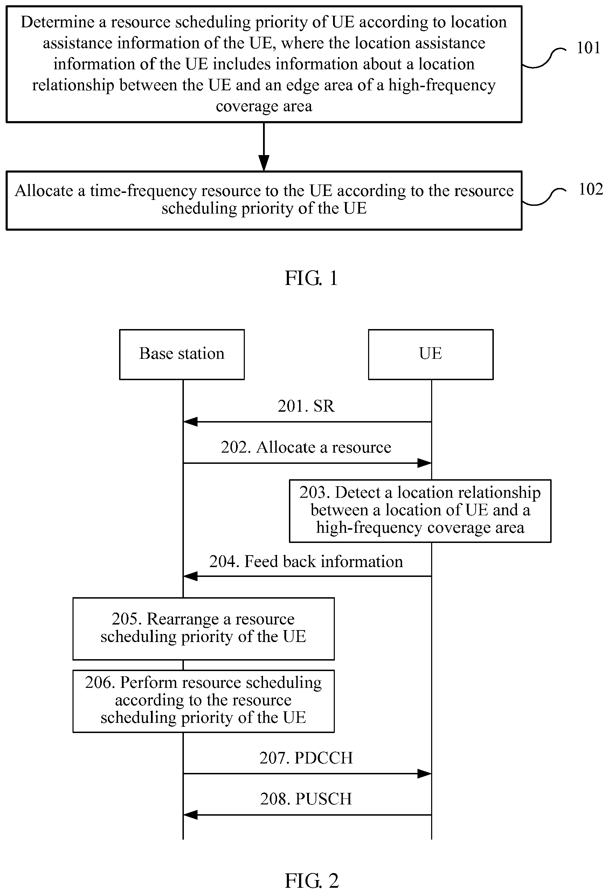

FIG. 1 is a schematic flowchart of a resource scheduling method according to an embodiment of the present invention.

101. Determine a resource scheduling priority of UE according to location assistance information of the UE.

The location assistance information of the UE includes information about a location relationship between the UE and an edge area of a high-frequency coverage area.

It should be understood that, in this embodiment of the present invention, the high-frequency coverage area may be implemented by using a high-frequency map application (App). The UE may determine a type of an area to which the UE belongs (a high-frequency coverage area or a high-frequency communication blind area), an SNR of the area to which the UE belongs, whether the UE is covered by a high frequency beam, and the like according to the high-frequency coverage area and location information of the UE. The high-frequency coverage area may further be divided into a high-frequency edge area and a high-frequency center area. For the high-frequency edge area, it may be specified: An area, in the high-frequency coverage area, that is within a given distance away from an edge of the high-frequency coverage area belongs to the high-frequency edge area. For example, a range, in the high-frequency coverage area, that is within a given distance (for example, 1 m) away from an edge of the high-frequency coverage area may be defined as the high-frequency edge area.

Optionally, the location assistance information of the UE may include location indication information of the UE. The location indication information is used to indicate whether the UE is located in the edge area of the high-frequency coverage area.

Optionally, the location assistance information of the UE may include edge location information of the UE. The edge location information is used to indicate a distance between the UE and the edge of the high-frequency coverage area.

It should be understood that, in specific application, a base station may determine the resource scheduling priority according to other factors in addition to the location assistance information of the UE. For example, the base station may comprehensively consider the location assistance information, traffic volume information, SNR information, and the like of the UE, to determine the resource scheduling priority of the UE.

102. Allocate a time-frequency resource to the UE according to the resource scheduling priority of the UE.

In this embodiment of the present invention, a resource scheduling priority of UE is determined according to location assistance information that is determined according to a location relationship between the UE and an edge area of a high-frequency coverage area, and a time-frequency resource is allocated to the UE according to the resource scheduling priority of the UE, so as to ensure proper resource scheduling for an edge user of a high-frequency communication blind area, so that the edge user of the high-frequency communication blind area has relatively desirable user experience.

Optionally, in an embodiment, before step 101, the method further includes: determining the location assistance information according to location information of the UE and the high-frequency coverage area. The base station has a module or an application program (App) that can compute a high-frequency coverage area.

Optionally, in an embodiment, before step 101, the method further includes: receiving the location assistance information sent by the UE. The location assistance information is determined by the UE according to location detection information of the UE and the high-frequency coverage area. The UE has a module or an application program (App) that can compute a high-frequency coverage area.

The following further describes the method in this embodiment of the present invention with reference to specific embodiments.

FIG. 2 is an interaction flowchart of an uplink resource scheduling method according to an embodiment of the present invention. In this embodiment of the present invention, UE has a module or an application program (App) that can compute a high-frequency coverage area.

201. The UE sends an SR.

When the UE has a service request, the UE may send a scheduling request (Scheduling Request, SR) to a base station, to request allocation of an uplink resource.

202. A base station allocates a resource.

The base station may allocate a time-frequency resource to the UE according to the received SR, so that the UE feeds back related location assistance information.

203. The UE detects a location relationship between a location of the UE and a high-frequency coverage area.

After the base station allocates the time-frequency resource to the UE, the UE may detect the location relationship between the location of the UE and the high-frequency coverage area.

Specifically, the UE may determine the location relationship between the UE and the high-frequency coverage area according to a high-frequency map APP carried in the UE and location information of the UE.

The UE may obtain the location information of the UE in multiple manners. For example, the location information of the UE is obtained by using a global positioning system (Global Positioning System, GPS), or the location information of the UE is obtained by using the BeiDou Navigation Satellite System.

The high-frequency map APP may determine the high-frequency coverage area in multiple manners. In a specific implementation in this embodiment of the present invention, when the high-frequency coverage area is being determined, different high-frequency communication blind areas may be determined according to types of high-frequency communication blind areas, and then the high-frequency coverage area is finalized. For example, a type of high-frequency communication blind area may be determined according to an SNR, where the SNR of the type of high-frequency communication blind area is less than a lower limit of a normal SNR of high frequency communication corresponding to the area. Specifically, assuming that a normal SNR of high frequency communication within an area 1 ranges from 5 db to 10 db, and an SNR of a small area 2 in the area 1 is 1 db, it may consider that the small area 2 is a high-frequency communication blind area. For another example, a type of high-frequency communication blind area may be determined by using a GPS, and the type of high-frequency communication blind area is caused by a shielding object, or the like. Certainly, there may alternatively be another type of high-frequency communication blind area and another manner for obtaining a high-frequency communication blind area. Details are not described in this embodiment of the present invention herein. Several types of high-frequency communication blind areas may be synthesized to generate a relatively complete high-frequency coverage area.

The UE may determine the location relationship between the location of the UE and the high-frequency coverage area according to the high-frequency coverage area determined by the high-frequency map APP and GPS information of the UE.

204. The UE sends feedback information.

The UE may feed back location assistance information of multiple forms to the base station, so that the base station adjusts a resource scheduling priority of the UE according to the location assistance information reported by the UE. The location assistance information includes information about the location relationship between the location of the UE and the high-frequency coverage area.

In a specific implementation, the UE feeds back location indication information to the base station. Specifically, a range, in the high-frequency coverage area, that is within a given distance (for example, 1 m) away from an edge of the high-frequency coverage area may be defined as a high-frequency edge area. For UE in the area, a location indication (edge sign) is 1; for UE out of the area, a location indication (edge sign) is 0. Then, the UE reports the location indication information (edge sign) 0 and 1 to the BS along with a signaling signal. In this manner, report overheads of the UE are relatively small.

In another specific implementation, the UE feeds back edge location information to the base station. The UE computes a distance between the UE and an edge of the high-frequency coverage area according to the GPS positioning information and the high-frequency coverage area, and writes the distance into the reported edge location information (edge inf.). In this case, the edge location information (edge inf.) is reported by the UE to the BS along with a signaling signal. Compared with the first manner, in this manner, higher precision is obtained because the base station performs determining according to distance information, but report overheads of the UE are larger.

It should be understood that, in this embodiment of the present invention, UE in a high-frequency communication blind area is excluded. It is the same as the following.

Certainly, the UE may alternatively send location assistance information of another form. Details are not described in this embodiment of the present invention herein.

When sending the feedback information, the UE may perform a feedback according to the time-frequency resource allocated by the base station to the UE.

205. The base station rearranges a resource scheduling priority of the UE.

When information reported by the UE is location indication information, UE whose location indication information is 1 has a higher resource scheduling priority than that of UE whose location indication information is 0. The base station may adjust the resource scheduling priority of the UE according to the location indication information.

Similarly, when information reported by the UE is edge location information, UE that is at a smaller distance away from an edge of the map has a higher resource scheduling priority than that of UE that is at a larger distance away from the edge of the map. The base station may adjust the resource scheduling priority of the UE according to the edge location information.

206. The base station performs resource scheduling according to the resource scheduling priority of the UE.

For specific implementation, reference may be made to the prior art.

207. The base station sends a PDCCH.

The base station delivers the physical downlink control channel (PDCCH, Physical Downlink Control Channel) to the UE, to notify the UE of the allocated time-frequency resource, a modulation and coding scheme, and the like.

208. The UE sends a PUSCH.

The UE reports the physical uplink shared channel (Physical Uplink Shared Channel, PUSCH) to the base station, to send a big-data service to the base station.

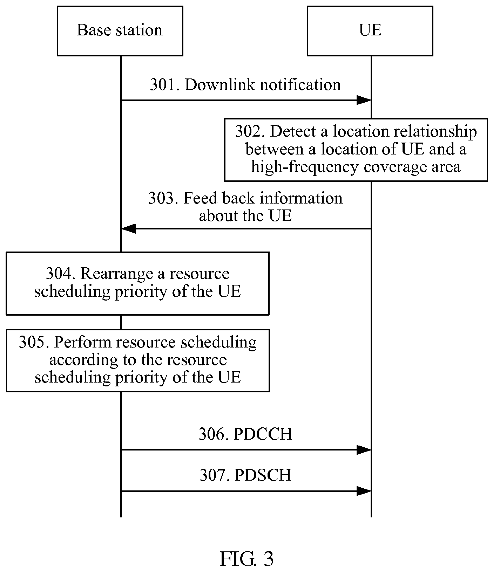

FIG. 3 is an interaction flowchart of a downlink resource scheduling method according to an embodiment of the present invention. In this embodiment of the present invention, UE has a module or an application program (App) that can compute a high-frequency map.

301. A base station sends a downlink notification.

The base station sends information about the downlink notification to the UE, where the information about the downlink notification includes information such as a time-frequency resource allocated by the base station to the UE. The UE may feed back related location assistance information according to the time-frequency resource allocated by the base station.

302. The UE detects a location relationship between a location of the UE and a high-frequency coverage area.

For specific implementation of step 302, reference may be made to step 203 in FIG. 2. Details are not described in this embodiment of the present invention herein again.

303. The UE sends feedback information.

The UE sends the feedback message to the base station according to the time-frequency resource allocated by the base station to the UE in the downlink notification. For content of the feedback message, reference may be made to step 204 in FIG. 2. Details are not described in this embodiment of the present invention herein again.

304. The base station rearranges a resource scheduling priority of the UE.

305. The base station performs resource scheduling according to the resource scheduling priority of the UE.

306. The base station sends a PDCCH.

For specific implementation of steps 304 to 306, reference may be made to steps 205 to 207 in FIG. 2. Details are not described in this embodiment of the present invention herein again.

307. The base station sends a PDSCH.

The base station delivers the physical downlink shared channel (Physical Downlink Shared Channel, PDSCH) to the UE, to send a big-data service to the UE.

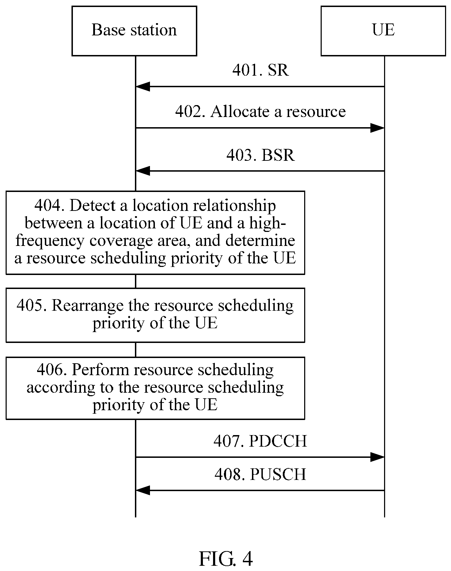

FIG. 4 is an interaction flowchart of another uplink resource scheduling method according to an embodiment of the present invention. In this embodiment of the present invention, a base station has a module or an application program (App) that can compute a high-frequency coverage area.

401. UE sends an SR.

When the UE has a service request, the UE may send an SR to the base station, to request allocation of an uplink resource.

402. The base station allocates a resource.

The base station may allocate a time-frequency resource to the UE according to the received SR, so that the UE sends feedback information. Specifically, the UE may perform a feedback by using a BSR or the like.

403. The UE sends a BSR.

The UE sends the buffer status report (Buffer States Report, BSR) to the base station, to notify the base station of a current buffer state. The UE may notify the base station of a to-be-sent data volume, in an uplink buffer, of the UE side by using the BSR, to obtain a resource required for transmission of uplink data. For specific implementation thereof, reference may be made to the prior art. Details are not described in this embodiment of the present invention herein.

404. Detect a location relationship between a location of the UE and a high-frequency coverage area, and determine a resource scheduling priority of the UE.

The base station may detect, according to a high-frequency map APP of the base station, whether the UE is in a high-frequency edge area, and determine the resource scheduling priority of the UE according to the location relationship between the current location of the UE and the high-frequency coverage area.

In a specific implementation, the base station may define, as the high-frequency edge area, a range that is within a given distance (for example, 1 m) away from an edge of the high-frequency coverage area; according to location information of the UE and the high-frequency coverage area, determine whether the UE is in the high-frequency edge area; and according to whether the UE is in the high-frequency edge area, determine the resource scheduling priority of the UE. UE in the area has a higher resource priority than that of UE out of the area.

In another specific implementation, the UE feeds back edge location information to the base station. The base station may compute a distance between the UE and an edge of the high-frequency coverage area according to current location information of the UE and the high-frequency coverage area, and determine the resource scheduling priority of the UE according to the distance between the UE and the edge of the high-frequency coverage area. UE that is at a smaller distance away from the edge of the high-frequency coverage area has a higher resource scheduling priority than that of UE that is at a larger distance away from the edge of the high-frequency coverage area.

405. The base station rearranges the resource scheduling priority of the UE.

406. The base station performs resource scheduling according to the resource scheduling priority of the UE.

407. The base station sends a PDCCH.

408. The UE sends a PUSCH.

For specific implementation of steps 405 to 408, reference may be made to steps 205 to 208 in FIG. 2. Details are not described in this embodiment of the present invention herein again.

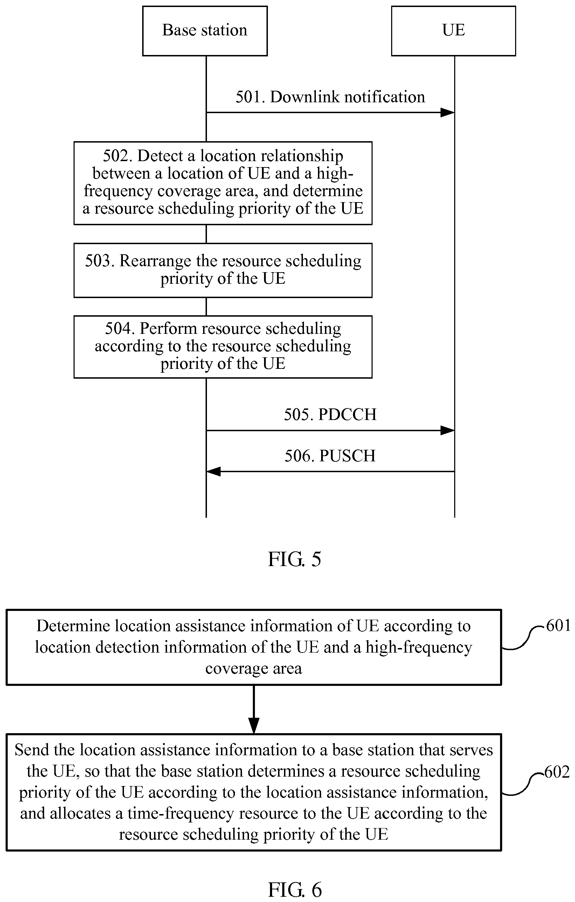

FIG. 5 is an interaction flowchart of another downlink resource scheduling method according to an embodiment of the present invention. In this embodiment of the present invention, a base station has a module or an application program (App) that can compute a high-frequency coverage area.

501. The base station sends a downlink notification.

The base station sends information about the downlink notification to UE, where the information about the downlink notification includes information such as a time-frequency resource allocated by the base station to the UE.

502. Detect a location relationship between a location of UE and a high-frequency coverage area, and determine a resource scheduling priority of the UE.

503. The base station rearranges the resource scheduling priority of the UE.

504. The base station performs resource scheduling according to the resource scheduling priority of the UE.

505. The base station sends a PDCCH.

For specific implementation of steps 502 to 505, reference may be made to steps 404 to 407 in FIG. 4. Details are not described in this embodiment of the present invention herein again.

506. The base station sends a PDSCH.

The base station delivers the PDSCH to the UE, to send a big-data service to the UE.

Certainly, it should be understood that, both the base station and the UE may have a module or an application program (App) that can compute a high-frequency coverage area. In this case, for uplink resource scheduling, reference may be made to the method in FIG. 2 or the method in FIG. 4. Similarly, for uplink resource scheduling, reference may be made to the method in FIG. 3 or the method in FIG. 5.

FIG. 6 is a schematic flowchart of a resource scheduling method according to an embodiment of the present invention.

601. Determine location assistance information of UE according to location detection information of the UE and a high-frequency coverage area.

602. Send the location assistance information to a base station that serves the UE, so that the base station determines a resource scheduling priority of the UE according to the location assistance information, and allocates a time-frequency resource to the UE according to the resource scheduling priority of the UE.

In this embodiment of the present invention, location assistance information is determined according to a location relationship between UE and an edge area of a high-frequency coverage area, and the location assistance information is sent to a base station, so that the base station determines a resource scheduling priority of the UE, and allocates a time-frequency resource to the UE according to the resource scheduling priority of the UE. In this way, proper resource scheduling for an edge user of a high-frequency communication blind area can be ensured, so that the edge user of the high-frequency communication blind area has relatively desirable user experience.

Optionally, in an embodiment, step 601 is specifically implemented as follows: determining location indication information of the UE according to the location detection information of the UE and the high-frequency coverage area, where the location indication information is used to indicate whether the UE is located in an edge area of the high-frequency coverage area.

Optionally, in another embodiment, step 601 is specifically implemented as follows: determining edge location information of the UE according to the location detection information of the UE and the high-frequency coverage area, where the edge location information is used to indicate a distance between the UE and an edge of the high-frequency coverage area.

For specific implementation of the method in this embodiment of the present invention, reference may be made to the method performed by the UE in the embodiments shown in FIG. 2 and FIG. 3.

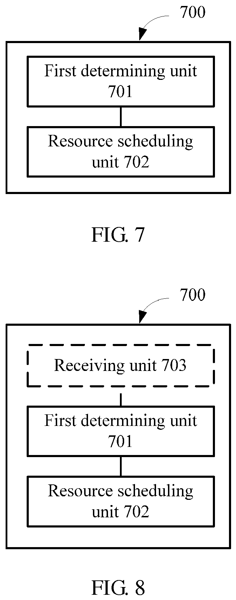

FIG. 7 is a schematic block diagram of a base station 700 according to an embodiment of the present invention. As shown in FIG. 7, the base station 700 may include a first determining unit 701 and a resource scheduling unit 702.

The first determining unit 701 is configured to determine a resource scheduling priority of UE according to location assistance information of the UE.

The location assistance information of the UE includes information about a location relationship between the UE and an edge area of a high-frequency coverage area.

Optionally, the location assistance information includes location indication information of the UE, where the location indication information is used to indicate whether the UE is located in the edge area of the high-frequency coverage area.

Alternatively, optionally, the location assistance information includes edge location information of the UE, where the edge location information is used to indicate a distance between the UE and an edge of the high-frequency coverage area.

It should be understood that, in specific application, the base station may determine the resource scheduling priority according to other factors in addition to the location assistance information of the UE. For example, the base station may comprehensively consider the location assistance information, traffic volume information, SNR information, and the like of the UE, to determine the resource scheduling priority of the UE.

The resource scheduling unit 702 is configured to allocate a time-frequency resource to the UE according to the resource scheduling priority of the UE.

In this embodiment of the present invention, the base station 700 determines a resource scheduling priority of UE according to location assistance information that is determined according to a location relationship between the UE and an edge area of a high-frequency coverage area, and allocates a time-frequency resource to the UE according to the resource scheduling priority of the UE, so as to ensure proper resource scheduling for an edge user of a high-frequency communication blind area, so that the edge user of the high-frequency communication blind area has relatively desirable user experience.

Optionally, in an embodiment, as shown in FIG. 8, the base station 700 may further include a receiving unit 703, configured to receive the location assistance information sent by the UE. The location assistance information is determined by the UE according to location detection information of the UE and the high-frequency coverage area. In this embodiment of the present invention, UE has a module or an application program (App) that can compute a high-frequency coverage area.

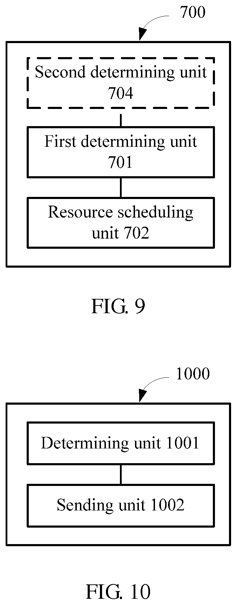

Optionally, in another embodiment, as shown in FIG. 9, the base station 700 may further include a second determining unit 704, configured to determine the location assistance information according to location information of the UE and the high-frequency coverage area. In this embodiment of the present invention, the base station has a module or an application program (App) that can compute a high-frequency coverage area.

In addition, the base station 700 may further perform the method in FIG. 1, and implement functions of the base station in the embodiments shown in FIG. 1 to FIG. 5. Details are not described in this embodiment of the present invention herein again.

FIG. 10 is a schematic block diagram of user equipment 1000 according to an embodiment of the present invention. The user equipment 1000 may include a determining unit 1001 and a sending unit 1002.

The determining unit 1001 is configured to determine location assistance information of the user equipment 1000 according to location detection information of the user equipment 1000 and a high-frequency coverage area.

The sending unit 1002 is configured to send the location assistance information to a base station that serves the user equipment 1000, so that the base station determines a resource scheduling priority of the user equipment 1000 according to the location assistance information, and allocates a time-frequency resource to the user equipment 1000 according to the resource scheduling priority of the user equipment 1000.

In this embodiment of the present invention, the user equipment 1000 determines location assistance information according to a location relationship between the user equipment 1000 and an edge area of a high-frequency coverage area, and sends the location assistance information to a base station, so that the base station determines a resource scheduling priority of the user equipment 1000, and allocates a time-frequency resource to the user equipment 1000 according to the resource scheduling priority of the user equipment 1000. In this way, proper resource scheduling for an edge user of a high-frequency communication blind area can be ensured, so that the edge user of the high-frequency communication blind area has relatively desirable user experience.

Optionally, in an embodiment, the determining unit 1001 is specifically configured to determine location indication information of the user equipment 1000 according to the location detection information of the user equipment 1000 and the high-frequency coverage area. The location indication information is used to indicate whether the user equipment 1000 is located in an edge area of the high-frequency coverage area.

Optionally, in another embodiment, the determining unit 1001 is specifically configured to determine edge location information of the user equipment 1000 according to the location detection information of the user equipment 1000 and the high-frequency coverage area. The edge location information is used to indicate a distance between the user equipment 1000 and an edge of the high-frequency coverage area.

In addition, the user equipment 1000 may further perform the method in FIG. 6, and implement functions of the UE in the embodiments shown in FIG. 2, FIG. 3, and FIG. 6. Details are not described in this embodiment of the present invention herein again.

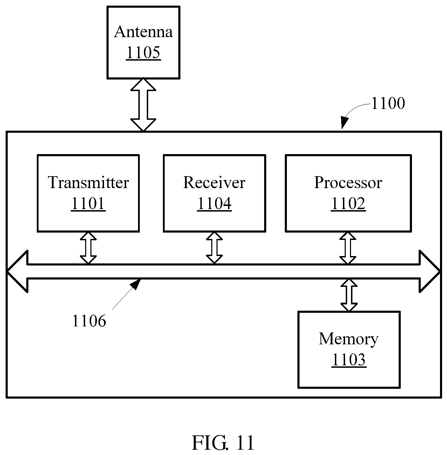

FIG. 11 is a schematic structural diagram of a base station 1100 according to an embodiment of the present invention. The base station 1100 may include a processor 1102, a memory 1103, a transmitter 1101, and a receiver 1104.

The receiver 1104, the transmitter 1101, the processor 1102, and the memory 1103 are connected to each other by using a bus 1106. The bus 1106 may be an ISA bus, a PCI bus, an EISA bus, or the like. The bus may be classified into an address bus, a data bus, a control bus, and the like. For ease of representation, the bus is represented by using only one double-headed arrow in FIG. 11, which, however, does not mean that there is only one bus or only one type of bus. In specific application, the transmitter 1101 and the receiver 1104 may be coupled to an antenna 1105.

The memory 1103 is configured to store a program. Specifically, the program may include program code, and the program code includes a computer operation instruction. The memory 1103 may include a read-only memory and a random access memory, and gives an instruction to and provides data for the processor 1102. The memory 1103 may include a high-speed RAM memory, and may further include a non-volatile memory (non-volatile memory), such as at least one magnetic disk memory.

The processor 1102 executes the program stored in the memory 1103, and is specifically configured to perform the following operations:
determining a resource scheduling priority of UE according to location assistance information of the UE, where the location assistance information of the UE includes information about a location relationship between the UE and an edge area of a high-frequency coverage area; and
allocating a time-frequency resource to the UE according to the resource scheduling priority of the UE.

The foregoing method performed by the base station disclosed in any one of the embodiments in FIG. 1 to FIG. 5 of the present invention may be applied to the processor 1102, or may be implemented by the processor 1102. The processor 1102 may be an integrated circuit chip, and has a signal processing capability. During an implementation process, steps in the foregoing methods may be completed by using an integrated logic circuit of hardware in the processor 1102 or an instruction in a software form. The processor 1102 may be a general-purpose processor, including a central processing unit (Central Processing Unit, CPU for short), a network processor (Network Processor, NP for short), or the like. Alternatively, the processor 1102 may be a digital signal processor (DSP), an application-specific integrated circuit (ASIC), a field programmable gate array (FPGA) or another programmable logic device, a discrete gate or a transistor logic device, or a discrete hardware component. The processor 1102 may implement or perform the methods, steps, and logical block diagrams disclosed in this embodiment of the present invention. The general purpose processor may be a microprocessor, or the processor may be any regular processor or the like. The steps in the methods disclosed with reference to the embodiments of the present invention may be executed directly in a hardware form of a decoding processor, or executed by a combination of hardware in a decoding processor and a software module. The software module may be located in a storage medium that is mature in the prior art, such as a random access memory, a flash memory, a read-only memory, a programmable read-only memory, an electrically erasable programmable memory, or a register. The storage medium is located in the memory 1103. The processor 1102 reads information from the memory 1103, and completes the steps of the foregoing methods with reference to the hardware of the processor 1102.

Optionally, the location assistance information includes location indication information of the UE, where the location indication information is used to indicate whether the UE is located in the edge area of the high-frequency coverage area.

Alternatively, optionally, the location assistance information includes edge location information of the UE, where the edge location information is used to indicate a distance between the UE and an edge of the high-frequency coverage area.

It should be understood that, in specific application, the base station 1100 may determine the resource scheduling priority according to other factors in addition to the location assistance information of the UE. For example, the base station 1100 may comprehensively consider the location assistance information, traffic volume information, SNR information, and the like of the UE, to determine the resource scheduling priority of the UE.

Optionally, in an embodiment, the processor 1102 may further receive, by using the receiver 1104, the location assistance information sent by the UE. The location assistance information is determined by the UE according to location detection information of the UE and the high-frequency coverage area. In this embodiment of the present invention, the UE has a module or an application program (App) that can compute a high-frequency coverage area.

Optionally, in another embodiment, the processor 1102 may further determine the location assistance information according to location information of the UE and the high-frequency coverage area. In this embodiment of the present invention, the base station 1100 has a module or an application program (App) that can compute a high-frequency coverage area.

In addition, the base station 1100 may further perform the method in FIG. 1, and implement functions of the base station in the embodiments shown in FIG. 1 to FIG. 5. Details are not described in this embodiment of the present invention herein again.

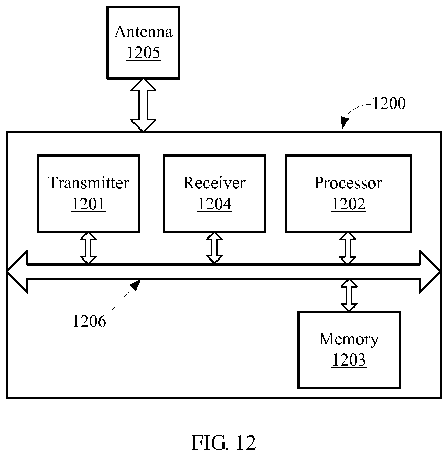

FIG. 12 is a schematic structural diagram of user equipment 1200 according to an embodiment of the present invention. The user equipment 1200 may include a processor 1202, a memory 1203, a transmitter 1201, and a receiver 1204.

The receiver 1204, the transmitter 1201, the processor 1202, and the memory 1203 are connected to each other by using a bus 1206. The bus 1206 may be an ISA bus, a PCI bus, an EISA bus, or the like. The bus may be classified into an address bus, a data bus, a control bus, and the like. For ease of representation, the bus is represented by using only one double-headed arrow in FIG. 12, which, however, does not mean that there is only one bus or only one type of bus. In specific application, the transmitter 1201 and the receiver 1204 may be coupled to an antenna 1205.

The memory 1203 is configured to store a program. Specifically, the program may include program code, and the program code includes a computer operation instruction. The memory 1203 may include a read-only memory and a random access memory, and gives an instruction to and provides data for the processor 1202. The memory 1203 may include a high-speed RAM memory, and may further include a non-volatile memory (non-volatile memory), such as at least one magnetic disk memory.

The processor 1202 executes the program stored in the memory 1203, and is specifically configured to perform the following operation:
determining location assistance information of the user equipment 1200 according to location detection information of the user equipment 1200 and a high-frequency coverage area.

The transmitter 1201 sends the location assistance information to a base station that serves the user equipment 1200, so that the base station determines a resource scheduling priority of the user equipment 1200 according to the location assistance information, and allocates a time-frequency resource to the user equipment 1200 according to the resource scheduling priority of the user equipment 1200.

The foregoing method performed by the UE disclosed in any one of the embodiments in FIG. 2, FIG. 3, or FIG. 6 of the present invention may be applied to the processor 1202, or may be implemented by the processor 1202. The processor 1202 may be an integrated circuit chip, and has a signal processing capability. During an implementation process, steps in the foregoing methods may be completed by using an integrated logic circuit of hardware in the processor 1202 or an instruction in a software form. The processor 1202 may be a general-purpose processor, including a central processing unit (Central Processing Unit, CPU for short), a network processor (Network Processor, NP for short), or the like. Alternatively, the processor 1202 may be a digital signal processor (DSP), an application-specific integrated circuit (ASIC), a field programmable gate array (FPGA) or another programmable logic device, a discrete gate or a transistor logic device, or a discrete hardware component. The processor 1202 may implement or perform the methods, steps, and logical block diagrams disclosed in this embodiment of the present invention. The general purpose processor may be a microprocessor, or the processor may be any regular processor or the like. The steps in the methods disclosed with reference to the embodiments of the present invention may be executed directly in a hardware form of a decoding processor, or executed by a combination of hardware in a decoding processor and a software module. The software module may be located in a storage medium that is mature in the prior art, such as a random access memory, a flash memory, a read-only memory, a programmable read-only memory, an electrically erasable programmable memory, or a register. The storage medium is located in the memory 1203. The processor 1202 reads information from the memory 1203, and completes the steps of the foregoing methods with reference to the hardware of the processor 1202.

In this embodiment of the present invention, the user equipment 1200 determines location assistance information according to a location relationship between the user equipment 1200 and an edge area of a high-frequency coverage area, and sends the location assistance information to a base station, so that the base station determines a resource scheduling priority of the user equipment 1200, and allocates a time-frequency resource to the user equipment 1200 according to the resource scheduling priority of the user equipment 1200. In this way, proper resource scheduling for an edge user of a high-frequency communication blind area can be ensured, so that the edge user of the high-frequency communication blind area has relatively desirable user experience.

Optionally, in an embodiment, during a process of determining location assistance information of the user equipment 1200 according to location detection information of the user equipment 1200 and a high-frequency coverage area, the processor 1202 is specifically configured to determine location indication information of the user equipment 1200 according to the location detection information of the user equipment 1200 and the high-frequency coverage area. The location indication information is used to indicate whether the user equipment 1200 is located in an edge area of the high-frequency coverage area.

Optionally, in another embodiment, during a process of determining location assistance information of the user equipment 1200 according to location detection information of the user equipment 1200 and a high-frequency coverage area, the processor 1202 is specifically configured to determine edge location information of the user equipment 1200 according to the location detection information of the user equipment 1200 and the high-frequency coverage area. The edge location information is used to indicate a distance between the user equipment 1200 and an edge of the high-frequency coverage area.

In addition, the user equipment 1200 may further perform the method in FIG. 6, and implement functions of the UE in the embodiments shown in FIG. 2, FIG. 3, and FIG. 6. Details are not described in this embodiment of the present invention herein again.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A resource scheduling method, wherein the method comprises:
determining a resource scheduling priority of user equipment UE according to location assistance information of the UE, wherein the location assistance information of the UE comprises information about a location relationship between the UE and an edge area of a high-frequency coverage area; and
allocating a time-frequency resource to the UE according to the resource scheduling priority of the UE.

2. The method according to claim 1, wherein before the determining a resource scheduling priority of UE according to location assistance information of the UE, the method further comprises:
receiving the location assistance information sent by the UE, wherein the location assistance information is determined by the UE according to location detection information of the UE and the high-frequency coverage area.

3. The method according to claim 1, wherein before the determining a resource scheduling priority of UE according to location assistance information of the UE, the method further comprises:
determining the location assistance information according to location information of the UE and the high-frequency coverage area.

4. The method according to any one of claims 1 to 3, wherein
the location assistance information comprises location indication information of the UE, wherein the location indication information is used to indicate whether the UE is located in the edge area of the high-frequency coverage area.

5. The method according to any one of claims 1 to 3, wherein
the location assistance information comprises edge location information of the UE, wherein the edge location information is used to indicate a distance between the UE and an edge of the high-frequency coverage area.

6. A resource scheduling method, comprising:
determining location assistance information of user equipment UE according to location detection information of the UE and a high-frequency coverage area; and
sending the location assistance information to a base station that serves the UE, so that the base station determines a resource scheduling priority of the UE according to the location assistance information, and allocates a time-frequency resource to the UE according to the resource scheduling priority of the UE.

7. The method according to claim 6, wherein the determining location assistance information of UE according to location detection information of the UE and a high-frequency coverage area comprises:
determining location indication information of the UE according to the location detection information of the UE and the high-frequency coverage area, wherein the location indication information is used to indicate whether the UE is located in an edge area of the high-frequency coverage area.

8. The method according to claim 6, wherein the determining location assistance information of UE according to location detection information of the UE and a high-frequency coverage area comprises:
determining edge location information of the UE according to the location detection information of the UE and the high-frequency coverage area, wherein the edge location information is used to indicate a distance between the UE and an edge of the high-frequency coverage area.

9. A base station, comprising:
a first determining unit, configured to determine a resource scheduling priority of user equipment UE according to location assistance information of the UE, wherein the location assistance information of the UE comprises information about a location relationship between the UE and an edge area of a high-frequency coverage area; and
a resource scheduling unit, configured to allocate a time-frequency resource to the UE according to the resource scheduling priority of the UE.

10. The base station according to claim 9, wherein the base station further comprises:
a receiving unit, configured to receive the location assistance information sent by the UE, wherein the location assistance information is determined by the UE according to location detection information of the UE and the high-frequency coverage area.

11. The base station according to claim 9, further comprising:
a second determining unit, configured to determine the location assistance information according to location information of the UE and the high-frequency coverage area.

12. The base station according to any one of claims 9 to 11, wherein
the location assistance information comprises location indication information of the UE, wherein the location indication information is used to indicate whether the UE is located in the edge area of the high-frequency coverage area.

13. The base station according to any one of claims 9 to 11, wherein
the location assistance information comprises edge location information of the UE, wherein the edge location information is used to indicate a distance between the UE and an edge of the high-frequency coverage area.

14. User equipment, comprising:
a determining unit, configured to determine location assistance information of the user equipment according to location detection information of the user equipment and a high-frequency coverage area; and
a sending unit, configured to send the location assistance information to a base station that serves the user equipment, so that the base station determines a resource scheduling priority of the user equipment according to the location assistance information, and allocates a time-frequency resource to the user equipment according to the resource scheduling priority of the user equipment.

15. The user equipment according to claim 14, wherein the determining unit is specifically configured to:
determine location indication information of the user equipment according to the location detection information of the user equipment and the high-frequency coverage area, wherein the location indication information is used to indicate whether the user equipment is located in an edge area of the high-frequency coverage area.

16. The user equipment according to claim 14, wherein the determining unit is specifically configured to:
determine edge location information of the user equipment according to the location detection information of the user equipment and the high-frequency coverage area, wherein the edge location information is used to indicate a distance between the user equipment and an edge of the high-frequency coverage area.
